(19) Europäisches Patentamt
European Patent Office
Office européen des brevets

(11) Numéro de publication : **0 093 635**
**B1**

(12) **FASCICULE DE BREVET EUROPÉEN**

(45) Date de publication du fascicule du brevet :
18.09.85

(51) Int. Cl.⁴ : **A 21 D   8/04**

(21) Numéro de dépôt : 83400759.3

(22) Date de dépôt : 18.04.83

(54) Composition fermentaire pour la préparation d'un levain de panification et son procédé d'obtention.

(30) Priorité : 23.04.82 FR 8207047

(43) Date de publication de la demande :
09.11.83 Bulletin 83/45

(45) Mention de la délivrance du brevet : _
18.09.85 Bulletin 85/38

(84) Etats contractants désignés :
AT BE CH DE GB IT LI LU NL SE

(56) Documents cités :
GB-A- 675 878
GB-A- 690 773
US-A- 1 894 135
US-A- 2 023 500
US-A- 3 034 896
US-A- 3 466 176
US-A- 4 353 926
CHEMICAL ABSTRACTS, vol. 94, no. 6, mars 1981,
page 588, no. 82485q, Columbus, Ohio, USA, V.I.
GUSEVA et al.: "Use of liquid yeast cultures with
various strains of thermophilic lactic acid bacteria"
SOVIET INVENTIONS ILLUSTRATED, semaine C50,
28 janvier 1981, résumé no. 89479 C/50, London, G.B.
SOVIET INVENTIONS ILLUSTRATED, semaine D35, 7
octobre 1981, résumé no. 63661 D35, Londres, G.B.
Brot und Gebäck 8 (1954), pages 198-202
Brot und Gebäck 17 (1963), pages 118-119

(73) Titulaire : Joulin, Gérard
44 rue de Pontoise
F-95870 Bezons (FR)

(72) Inventeur : Joulin, Gérard
44 rue de Pontoise
F-95870 Bezons (FR)

(74) Mandataire : Bonnetat, Christian et al
Cabinet PROPI Conseils 23 rue de Léningrad
F-75008 Paris (FR)

# 0 093 635

## Description

La présente invention concerne une composition fermentaire pour la préparation d'un levain de panification et le procédé d'obtention de cette composition par ensemencement et développement sur un milieu céréalier de souches de micro-organismes sélectionnés.

L'invention vise à permettre la préparation contrôlée et reproductible de levain de panification en vue de la préparation et de la cuisson artisanale ou industrielle de pain au levain.

Les propriétés et les qualités du pain traditionnel préparé au levain sont bien connues et se situent d'abord sur le terrain de sa qualité gustative mais aussi sur celui de son aptitude à la conservation dans le temps et de sa digestibilité.

Or, la technique de préparation d'un pain traditionnel au levain a été presque partout et presque systématiquement écartée au profit de la préparation de pain par fermentation de la pâte à pain ensemencée par des levures préparées industriellement, ce qui est la préparation de pain « en direct ».

L'intérêt et les qualités du pain au levain, mais aussi les difficultés de cette technique sont décrites par exemple dans le brevet français n° 1 274 981. La baisse de la consommation de pain dans les sociétés développées, notamment dans la société française, est sans doute liée à cette évolution technique vers un pain de préparation rapide de caractéristiques standardisées, à propriété gustative et à sapidité médiocre ou faible, mais seul compatible avec les nécessités d'un rendement économique minimum et avec les conditions de travail et les servitudes acceptées par le personnel de la profession.

Le rappel des conditions opératoires conduisant à la préparation satisfaisante des fournées quotidiennes de pain au levain montre en effet les difficultés inhérentes à cette technique et qui est loin de confirmer ce qu'une vision euphorisante et bucolique des procédés traditionnels pourrait laisser imaginer.

Le pain au levain est défini par le Recueil des Usages codifiant en France les usages constants et loyaux de la profession comme « un pain fabriqué uniquement avec de la farine, de l'eau, du sel, et du levain », lequel est « une pâte en fermentation à réaction acide », obtenue en incorporant de la farine et de l'eau à un levain ou à un levain chef sans apport de levures industrielles et perpétuée de façon méthodique par des « rafraîchissements » successifs assurant la sélection et la multiplication de la flore. Cette dernière est essentiellement constituée de bactéries acidifiantes (lactiques et acétiques) et des propres levures.

Le « levain chef » ou « chef » est constitué d'une partie de pâte à pain fermentée prélevée sur une fournée en cours et elle-même préparée à partir de levain.

Le levain de première résulte de la fermentation d'une pâte obtenue en incorporant des doses judicieuses de farine et d'eau au levain chef.

Le levain tout point résulte de la fermentation d'une pâte obtenue en incorporant des doses judicieuses de farine et d'eau :
— soit au levain chef (travail sur un levain),
— soit au levain de première (travail sur deux levains),
— soit au levain de seconde (travail sur trois levains).

La succession des opérations qui conduit du chef (conservé en attente depuis la fournée précédente) jusqu'à la fin de la cuisson de la nouvelle fournée varie suivant les méthodes, chaque artisan boulanger ayant ses recettes personnelles, mais elle est généralement évaluée à un chiffre compris entre 12 et 18 heures, compte tenu des temps de fermentations successives et de repos des levains et pâtes ce qui contraste avec les possibilités de préparation rapide de pain à la levure ou, pain en direct qui est voisine de 4 ou 5 heures.

Il est clair que compte tenu de l'évolution sociale, la préparation du pain traditionnel au levain est devenue difficilement compatible avec les conditions de travail (durée du travail, travail nocturne) acceptées par les professionnels ; et au moins dans les villes le pain en direct, levé à la levure, est devenu le pain traditionnel, pour constituer le pain de consommation courante.

Mais, les problèmes liés à la lenteur du processus d'élaboration ne sont pas les seuls motifs de la désaffection de la technique de panification au levain chez les professionnels.

Le levain est en effet le produit de la fermentation spontanée de la farine additionnée d'eau ; la simplicité de cette technique explique qu'elle soit très ancienne et elle remonterait aux Egyptiens : une bouillie de grains dégage des bulles, le liquide additionné à la pâte l'ensemence et provoque sa fermentation d'où un produit aéré et plus léger.

La technique de panification au levain, pour aboutir à un produit loyal est cependant infiniment plus complexe, puisqu'elle exige la succession de plusieurs phases de préparations correspondant aux étages successifs conduisant du chef source initiale des germes fermentaires jusqu'à la fournée totale ; et chaque étage correspond au développement d'un processus biologique résultant du développement des micro-organismes sur le support offert à leur prolifération et à leur multiplication ; or, le déroulement de ce processus, puisqu'il s'agit d'un phénomène lié à la vie répond mal ou avec des accidents erratiques à la prévision ; nous sommes ici loin d'un processus physique ou chimique dont les paramètres seraient faciles à mesurer, à définir et à contrôler.

Ainsi apparaît un inconvénient ou tout au moins une difficulté liée à l'utilisation de la technique de

2

panification sur levain ; elle exige une attention toute particulière, un soin méticuleux dans la conduite des opérations et un savoir faire lent à acquérir ; et ces conditions étant remplies il subsiste toujours le risque d'une déviation ou d'une évolution incontrôlée liée peut-être à des conditions opératoires mal conduites ou insuffisamment maîtrisées, mais aussi à la présence d'une flore parasite apportée par la farine, l'eau ou introduite accidentellement dans l'atmosphère du fournil.

Sans aller jusqu'à l'altération totale de la pâte, l'évolution négative ou défavorable de la pâte lors de la pousse, peut aboutir à un produit de goût médiocre ou franchement insuffisant.

De sorte que la technique de panification sur levain outre qu'elle reste exposée à des accidents affectant toute la fournée, ne permet pas d'assurer des conditions de qualité et de caractéristiques systématiquement reproductibles, même en partant d'un même chef utilisé et développé sur une même farine support.

Et pour ces raisons la technique de panification au levain qui apparaît largement répudiée par les professionnels exerçant dans un cadre artisanal se révèle à plus forte raison incompatible avec les conditions d'une fabrication industrielle. Cette dernière exige en effet des conditions de fiabilité totale dans le déroulement des processus à partir de produits de qualités standards et déterminés indépendamment des aléas ou des capacités ou aptitudes empiriques du personnel de fabrication.

La faveur dont continue à jouir le pain au levain, en raison de ses propriétés organoleptiques a donc conduit à la survie de cette fabrication, sous forme artisanale soit pour des productions locales et de débit limité, soit plus souvent sous forme de pain « à l'ancienne » commercialisé sous le drapeau de l'appel à la tradition et devenu un produit de luxe ne serait-ce qu'en raison de son prix lié nécessairement aux conditions (rappelées ci-dessus) de sa fabrication. Encore est-il fréquent que la préparation de pain au levain soit « aidée » pour obtenir une pousse suffisante ou plus sûre de la pâte par l'incorporation d'une certaine quantité de levure industrielle (classique dans la préparation du pain de consommation courante).

On a cherché à préparer des ferments utilisables en boulangerie : ainsi le brevet US-A-3 034 896 prévoit la fabrication d'un levain en cultivant des Pedicoccus cerevisiae et de la levure dans un levain (sponge).

Selon le brevet GB-A-675 878, on cultive deux sortes de levures dans un mélange de farine et d'eau.

Selon le brevet US-A-2 023 500 des bactéries lactiques sont cultivées dans du lait et le produit résultant est ajouté à un levain contenant des levures boulangères.

Mais, ces procédés n'apportent pas au pain produit la qualité du pain au levain de fabrication artisanale traditionnelle.

Les deux inconvénients majeurs du procédé de panification de pain sur levain, à savoir la lenteur et l'insécurité du procédé sont résolus par la mise en œuvre du procédé et du produit selon la présente invention qui vise à permettre la fabrication d'un pain sur levain dans des conditions rapides, en éliminant par conséquent les phases ou stages successifs de préparation des pâtes allant du chef à la pâte de la fournée en passant par le levain de première, puis le levain de seconde... Au contraire, l'invention permet d'obtenir rapidement un levain directement utilisable pour la pétrissée en réduisant ainsi la durée totale de préparation de la fournée jusqu'à la phase de cuisson à une période de temps sensiblement du même ordre que celle exigée pour la préparation (rapide) du pain « en direct ».

Mais de plus, l'invention permet d'éliminer les risques et les incertitudes liés aux phases successives de préparation depuis le chef jusqu'à la pétrissée en assurant à partir des ferments nouveaux mis en œuvre une sécurité totale dans la reproductibilité des résultats et des caractéristiques des produits obtenus.

Jusqu'à la mise en œuvre de la présente invention, la préparation du pain sur levain restait un travail dispersé, local, empirique, parcellaire effectué dans des conditions le plus souvent inadaptées et toujours variables, laissant la plus large place à l'intervention de phénomènes impondérables erratiques et incontrôlés, toutes conditions qui devaient nécessairement conduire à des résultats divers, inégaux et dépendant exclusivement de l'habileté ou de l'intuition du professionnel.

Avec la mise en œuvre de la présente invention, tout le déroulement du processus biologique qui était laissé, voire abandonné au savoir empirique du professionnel, sans moyen de contrôle dans des conditions opératoires inégales et incertaines à partir de ferments mal connus, et incontrôlés sur des supports eux-mêmes non certifiés et souvent inadaptés, est soustrait à ces conditions et à cette phase de travail artisanale pour être reporté et confié à une phase centralisée spécialement adaptée à cette fonction, travaillant dans des conditions permettant le contrôle de tous les paramètres ou données de départ et déchargeant ainsi le professionnel de la boulangerie d'une part de la servitude d'une préparation nécessitant une intervention programmée et presque constante et d'autre part, des risques d'une déviation dans l'évolution normale des phénomènes.

L'invention permettra d'assurer à partir des ferments nouveaux préparés et mis en œuvre la fabrication et la cuisson d'un pain au levain de qualité constante et échappant ainsi aux aléas ou accidents de fabrication résultant de fermentation incontrôlée ou influencées par l'intervention d'éléments indésirables.

L'invention permettra la fabrication industrielle ou semi-industrielle de pain au levain d'excellente qualité, de caractéristiques constantes et mis à la disposition quotidienne du consommateur.

L'invention permet en effet de supprimer les risques de déviation liés à la dispersion, à la lenteur et au manque de rigueur des conditions opératoires conduisant au développement des germes et micro-organismes actifs et vivant au sein de la pâte en préparation.

La condition d'une bonne panification est liée à la présence au sein de la pâte à pain d'une certaine densité des micro-organismes permettant d'assurer dans une période de temps ramenée à une durée aussi réduite que possible la maturation de la pâte et la pousse liée au dégagement de gaz carbonique créant la structure alvéolaire du pain. L'intérêt de la levure industrielle a été précisément de libérer en grande partie le boulanger des phases de préparation par étages successifs sur le milieu céréalier en vue de la prolifération des micro-organismes jusqu'à obtenir une pâte comportant la densité des micro-organismes nécessaires.

L'invention permet la préparation d'une composition fermentaire à base des micro-organismes caractéristiques de la flore composant le levain naturel, préparée et cultivée sur milieu céréalier et constituant un concentrat réunissant ces micro-organismes ainsi disponibles et aptes à être dispersés sur une pâte classique en assurant immédiatement l'ensemencement de cette pâte selon une densité optimum.

Cette composition étant préparée spécialement et par quantité pourra bénéficier d'un environnement adapté ; c'est-à-dire qu'elle peut être élaborée industriellement selon des techniques extrapolant les conditions du laboratoire, au moyen de matériels spécifiques par du personnel spécialisé, en utilisant des souches de micro-organismes constamment sélectionnées, isolées et surveillées, évitant toute contamination par des germes parasites ou indésirables et en utilisant des milieux de culture parfaitement approprié, contrôlés et ajustés en fonction des besoins et caractéristiques voulues pour les compositions fermentaires préparées.

A cet effet, l'invention concerne un procédé de préparation de ferments en phase liquide en vue de l'ensemencement et de la fermentation contrôlée d'une pâte à base de farine et d'eau pour la confection rapide d'un levain de panification du type dans lequel on utilise concurremment au moins une souche de lactobacille (choisie dans la famille comprenant Lactobacillus brevis, Lactobacillus casei, Lactobacillus delbrüeckii, Lactobacillus fermenti, Lactobacillus plantarum, Leuconostoc mesenteroïdes, Pediococcus cerevisiae) et au moins une souche de levure (choisie dans la famille comprenant saccharomyces cerevisiae et Candida tropicalis), est caractérisé par la succession des opérations suivantes :

— on isole des souches de micro-organismes sélectionnés et constitués d'au moins une souche de lactobacille et d'au moins une souche de levure et on développe séparément une colonie de chacune des souches isolées,

— on ensemence et on cultive lesdites colonies sur un milieu aqueux unique et commun et constitué de farine céréalière diluée dans environ 7 à 10 fois son volume d'eau,

— on recueille le milieu aqueux de culture après fermentation et prolifération des souches de micro-organismes sélectionnés, ce milieu constituant le concentrat fermentaire recherché.

De préférence le milieu de culture ensemencé par respectivement au moins une souche de levure et une souche de lactobacille est constitué par une dilution d'une part de farine et 0,3 part de germe de blé dans environ 8,5 parts d'eau.

Le milieu de culture avant ensemencement par les souches de micro-organismes est soumis à un traitement en vue de l'hydrolyse de l'amidon obtenu par action enzymatique, suivie d'une phase de stérilisation thermique en vue de la destruction des enzymes ainsi précédemment introduits.

L'ensemencement du milieu de culture et le développement des souches de micro-organismes au sein de ce milieu est effectué dans un fermenteur à agitation et insufflation d'air à température voisine de 30 °C. La farine diluée dans l'eau en vue de constituer le milieu de culture est de la farine de blé blutée à 83 % de mouture fraîche conduite sur meule de pierre.

L'invention concerne également le ferment en vue de l'ensemencement et de la fermentation contrôlée d'une pâte à base de farine et d'eau pour préparer rapidement un levain de panification, du type constitué de cultures fraîches de micro-organismes comportant d'une part au moins une souche de lactobacilles (choisie dans le groupe comportant Lactobacillus brevis, Lactobacillus casein, Lactobacillus delbrüeckii, Lactobacillus fermenti, Lactobacillus plantarum, leuconostoc mesenteroïdes, Pediococcus cerevisiae), et d'autre part au moins une souche de levure (choisie dans le groupe comportant saccharomyces cerevisiae et Candida tropicalis) et obtenu selon le procédé ci-dessus, et caractérisé en ce qu'il est constitué d'une suspension en milieu aqueux, composée de farine céréalière diluée dans de l'eau et ayant constituée le milieu de culture support de développement des lactobacilles et levures.

Ce milieu aqueux comporte entre 7 à 10 parts d'eau pour une part de farine céréalière et de préférence 8,5 parts d'eau et il comporte en outre 0,3 part de germe de blé. La concentration des micro-organismes par millilitre est voisine de : lactobacille : $10^9$ — levure : $2 \cdot 10^9$.

On a décrit ci-après à titre d'exemple une forme de réalisation de l'invention.

La préparation des nouveaux ferments céréaliers selon l'invention est conduite en trois étapes correspondant successivement à :

— une phase d'isolement et sélection des souches — une phase de développement des colonies — une phase de culture sur support céréalier.

La sélection des souches a été opérée à partir de l'observation et de l'identification de la flore naturelle et spontanée présente dans le levain artisanal et qui comporte d'une part des lactobacilles et d'autre part des agents levants du type levure.

Les lactobacilles caractéristiques de la flore du levain de panification sont notamment :

— Lactobacillus brevis — Lactobacillus casei — Lactobacillus delbrüeckii — Lactobacillus fermenti — Lactobacillus plantarum — Leuconostoc mesenteroïdes — Pediococcus cerevisiae.

Pour la mise en œuvre de l'invention on a de préférence retenu Lactobacillus plantarum qui se révèle d'ailleurs nettement majoritaire.

Les agents levants présents dans la flore observée sont essentiellement :

— Saccharomyces cerevisiae (levure de bière) — Candida tropicalis.

La levure de bière ne sera pas retenue, beaucoup plus pour des raisons tenant à la réglementation que pour des raisons techniques : la qualification de « pain au levain » exclut en effet théoriquement et selon la définition rappelée ci-dessus la présence de levure industrielle comme la levure de bière qui est précisément caractéristique du pain « en direct ».

On isole donc respectivement deux souches de micro-organismes respectivement :

— Lactobacillus plantarum — Candida tropicalis

qui ayant été identifiés et isolés lors d'une première culture sur boîte de pétri seront ensuite développées et multipliées dans une seconde phase de culture en Erlenmeyers puis dans une troisième phase en fermenteur.

La première phase d'identification-sélection est conduite évidemment séparément pour les deux souches de micro-organismes recherchés et isolés.

La seconde phase de développement des colonies en Erlenmeyers utilise également deux troncs parallèles correspondant à des milieux spécifiques de chaque souche.

Les deux premières phases visent à obtenir des colonies suffisamment importantes, bien identifiées et pures des micro-organismes utilisés dans la mise en œuvre de l'invention et en vue de l'ensemencement du milieu utilisé pour la troisième phase.

Cette troisième phase est par contre caractéristique du processus de l'invention par l'utilisation d'un milieu spécifique pour le développement mixte selon un tronc commun aux deux souches utilisées.

Les tableaux ci-après exposent les données essentielles et paramètres utilisés et définis pour la conduite des trois phases d'élaboration des concentrats fermentaires de l'invention.

On voit que dans la phase finale de culture en fermenteur on fait appel à un milieu de culture céréalier.

L'approche la plus logique est en effet d'utiliser l'amidon de blé comme source de carbone et d'énergie.

Ainsi, il ne sera pas nécessaire de passer par une étape de purification avant l'utilisation du milieu fermenté en panification. En effet, l'emploi de substrats tels que des sucres simples ne permettrait pas l'incorporation directe dans la pâte compte tenu de la législation des boulangeries pour les pains traditionnels.

De plus, en utilisant la farine de blé pour leur croissance, les ferments passent par une étape d'adaptation à la farine et peuvent développer des arômes avant l'étape de panification proprement dite.

La composition chimique de la farine découle de celle du grain de blé. La mouture doit fournir une farine contenant tous les éléments favorables du grain de blé ; assise protéique ouverte et une grande partie du germe.

Les différentes parties du grain de blé ont des compositions chimiques différentes. Du fait de cette répartition hétérogène des différents nutriments, les pertes nutritionnelles au stade de la meunerie concerne à la fois les protides, les acides gras, les minéraux et les vitamines. La qualité et la quantité de ces nutriments auront des conséquences directes sur la pousse des micro-organismes dans les levains mais également sur la digestibilité et sur l'arôme des pains.

On a choisi d'utiliser une farine blutée à 83 % sur meule de pierre (cette technique permet d'éviter un échauffement trop important de la farine).

De plus, la mouture sera utilisée assez rapidement pour éviter une oxydation trop importante des matières assimilables par les micro-organismes dans les levains.

Enfin, les blés issus de cultures dites « biologiques » seront utilisés de préférence.

Préalablement à l'ensemencement, on procède à une étape d'hydrolyse enzymatique de l'amidon.

On a retenu les enzymes et les paramètres suivants :

— l'amylase : Dexlase 40, RAPIDASE (Bacillus subtilis) à pH 6,5, 75°C pendant 30 minutes, 0,8 litre par tonne d'amidon

— l'amyloglucosidase : Amygase A.L., RAPIDASE (Aspergillus niger) à pH 4,5, 60 °C pendant 3 heures, 2 litres par tonne d'amidon.

**0 093 635**

Après hydrolyse enzymatique les enzymes sont détruits lors d'une étape de stérilisation du milieu à 115 °C pendant environ 25 minutes. Une combinaison d'une température élevée et d'un pH très bas sera plus efficace pour la destruction des enzymes.

Comme les bactéries se développent plus rapidement que les levures l'addition de sel permet de maintenir le rapport levures/bactéries dans un rapport convenable.

On obtient en fin de culture en fermenteur une phase liquide contenant en suspension les éléments résiduels du milieu, de culture et les micro-organismes développés dans ce milieu ayant atteint une concentration voisine de :

— Lactobacillus plantarum : $10^9$
— Candida tropicalis : $2 \cdot 10^9$.

Cette phase liquide constitue la composition fermentaire de l'invention, elle est apte à être conditionnée en flacon unitaire, par exemple en flacon type plasma stérile de 1 litre en vue de son utilisation dans le processus de panification.

Un litre de composition fermentaire permet d'ensemencer une pâte préparée sur la base de 20 kg de farine.

La préparation fermentaire de l'invention est conservée à basse température (4 °C) et reste active pendant une période minimum d'une semaine et pouvant aller jusqu'à trois semaines.

La composition fermentaire de l'invention n'est pas seulement un simple concentrat de culture de micro-organismes sélectionnés ; la phase de culture des souches sur milieu céréalier a permis en effet de développer des produits secondaires apportant à la pâte en cours de panification, puis de cuisson, des principes actifs aromatiques qui participent au développement et à l'exaltation des arômes caractéristiques du pain au levain.

Les ferments isolés à partir de levains de pâte et produits sur milieu à base de farine servent à ensemencer le levain proprement dit à la concentration de $910^{10}$ cellules par kg de farine.

Le levain est préparé avec la farine biologique blutée sur meule de pierre, de l'eau et les « ferments céréaliers de l'invention ».

La farine biologique, blutée sur meule de pierre à 83 % sera utilisée pour les mêmes raisons que précédemment.

L'eau du robinet peut convenir pour cette préparation.

Le levain placé à 30 °C sous une hygrométrie de 85 % fermente pendant 4 heures, puis il repose 5 heures à 5 °C avant son utilisation dans la pâte finale.

Il faut insister ici sur la rapidité d'obtention du levain dont les caractéristiques organoleptiques sont très voisines de celles observées sur un levain d'une semaine.

Par la maîtrise de la technologie et la bonne connaissance des critères microbiologiques, les résultats obtenus sont parfaitement reproductibles.

Aux différentes concentrations de « ferments céréaliers associés » introduits dans la pâte correspondront plusieurs types de pains aux arômes plus ou moins marqués. De même, aux concentrations en ferments lactiques élevées, la saveur acide des pains sera forte. En général, on préférera introduire une faible quantité de ferments dans les levains pour permettre une forte incorporation de ces derniers dans les pâtes finales (travail jusqu'à 50 % de la farine).

Le levain peut entrer dans la composition de la pâte finale dans la proportion indiquée ci-après. En dehors de procédés technologiques bien définis (temps de pointage, temps de fermentation des pâtes) les variations de la quantité du levain introduit dans la pâte finale ont une implication directe sur l'intensité des arômes dans les produits finis. On peut ainsi fabriquer une gamme de produits correspondant aux exigences des consommateurs.

Le même raisonnement peut être fait en tenant compte de la qualité des farines utilisées et notamment de leur axe de blutage.

Prenons l'exemple d'une incorporation de 50 % de levain dans la pâte finale (pourcentage par rapport à la farine).

Etapes de fabrication d'une boule de 300 g sur levain

Recette

| | |
|---|---|
| Farine biologique à 83 % blutée sur meule de pierre | 1 500 g |
| Gluten (facultatif) | 20 g |
| Sel | 35 g |
| Eau | 900 g |
| Levain (200 ml de ferments associés par kg de farine 83 %) pH 4,5 | 1 585 |
| Coulage : t eau | 45 °C |
| t pâte | 30 °C |
| Pétrissage : durée | 15 mn |
| Pétrin (tr/mn) | 150 |

| | |
|---|---|
| Pointage : durée | 150 mn |
| Poids du pâton | 370 g |
| Repos : temps | 10 mn |
| Laminage : | non |
| Twistage : | Boulage |
| Fermentation : t | 30 °C |
| hygro | 85 % |
| Fermentation : durée | 150 mn |
| Cuisson : durée | 30 mn |
| Cuisson : température voûte | 235 °C |
| Cuisson : température sole | 225 °C |
| Poids du pain cuit | 300 g |

Le temps de pointage peut paraître long (2 h 30). Toutefois, cette étape permet un « travail » de la farine par les ferments. Ce dernier étant indispensable surtout pour la panification de ce type de produit.

On pourra bien sûr envisager une fabrication plus rapide des pains en utilisant des techniques similaires. Il suffira d'incorporer les ferments levants de l'invention en plus grande quantité dans la pâte finale. Ces micro-organismes très hétéro-fermentaires induiront un développement rapide des pâtons tout en faisant ressortir le goût de froment de la farine.

La technologie de panification définie plus haut peut être transposée à la fabrication de produits de boulangerie divers de même qu'aux produits de la viennoiserie.

Les fabrications de tels produits varieront par les critères technologiques de panification proprement dite mais aussi et surtout par la nature et la qualité des ferments utilisés.

Pour les produits de viennoiserie par exemple, on préférera sélectionner une flore levante bien adaptée aux concentrations en sucre élevées dans les pâtes. De même, l'arôme du beurre inhérent au diacétyl pourra être induit par les produits du métabolisme d'une flore lactique appropriée.

Enfin, des souches identifiées sur des céréales variées pourront entrer dans la confection de pains à plusieurs céréales.

Le mélange des souches dans les ferments de l'invention entraîne :
— l'apparition d'arômes caractéristiques
— le développement des pâtons
— la conservation des pains
— la lutte contre l'apparition des phages dans l'étape de la préparation des ferments associés.

La maîtrise des phénomènes microbiologiques de même que la connaissance de critères technologiques précis permettent la reproductibilité des résultats pour l'industrie.

Enfin, le dosage des quantités de levain dans la pâte destinée à la cuisson, de même que les variations dans les quantités et qualités des matières premières (farine) permettent une diversification des produits.

Etapes de la préparation du milieu pour la production des ferments céréaliers en fermenteur.

Coup de chauffe de la farine à 100 °C

↓

Refroidissement du milieu à 75 °C

↓

Action de l'α amylase 30 minutes

↓

Refroidissement du milieu à 60 °C

↓

Action de la β amylase 120 minutes

↓

Addition d'autres éléments nutritifs dans le milieu

↓

Stérilisation 115 °C pendant 25 minutes

↓

Refroidissement du milieu à 30 °C

↓

CULTURE

Tableau

| INOCULUM | Durée d'in-cuba-tion | MATERIEL UTILISE | | MILIEU DE CULTURE | CONDITIONS DE CULTURE |
|---|---|---|---|---|---|
| PREMIERE ETAPE : CULTURE DES CELLULES EN BOITE DE PETRI (COLONIES ISOLEES) | | | | | |
| | 48h. | ① | Cellules iso-lées de Candida tropi-calis en boîte de pétri | **Composition du milieu pour levures :** $MgSO_4$ : 0,8g    Glucose :250g<br>$(NH_4)_2SO_4$ : 13,4g  Eau de ville: 1,0 1<br>$CaCl_2$ : 0,028g    (Agar Agar:20g)<br>$KH_2PO_4$: 2,2g    Autoclave :20mn à 1 bar<br>Extrait de levure    5g | Aerobiose<br><br>Température:30°C |
| | | ② | Cellules iso-lées de Lacto-bacilles planta-rum en boîte de pétri | **Composition du milieu pour lacto-bacilles:** (pour un litre de milieu gélosé)<br>Peptone: 10g<br>Extrait de boeuf:8g<br>Extrait de levure:4g<br>Acétate de sodium:5g<br>Posphate potassique:2g<br>Citrate d'ammonium:0,2g    Autoclave:<br>Sulfate de magnésium:0,2g    20mn à 1 bar<br>Sulfate de manganèse:0,05g<br>Glucose:20g<br>Twen 80:1ml<br>(Agar Agar:20g) | Aérobiose<br><br>Température:30°C |

0 093 635

Tableau (suite)

| INOCULUM | Durée d'incubation | MATERIEL UTILISE | MILIEU DE CULTURE | CONDITIONS DE CULTURE |
|---|---|---|---|---|
| DEUXIEME ETAPE : CULTURE DES CELLULES EN ERLENMEYERS | | | | |
| Utilisation d'une colonie de levure prélevée dans la boîte de pétri ① pour ensemencer chaque erlenmeyer (2 erlenmeyers au total) | | | 400 ml de milieu pour levure dans chaque erlenmeyer à bafles<br>Milieu pour les levures :<br> Glucose : 40g<br> Germe de blé :30g<br> $NH_4Cl$ : 5g<br> $KH_2PO_4$ :2,5g ( Autoclave )<br> ( 20mn 1bar )<br> Extrait de levure:6,0g<br> Eau distillée<br> q.s.p.:1000 ml | Aérobiose<br><br>Table agitatrice 150 rotations/mn<br><br>Amplitude:2,5cm<br><br>Température:30°C<br><br>Ph:6,5 |
| Utilisation d'une colonie de Lactobacillus Planatarum prélevée dans la boîte de pétri ②<br><br>pour ensemencer l'erlenmeyer | 72h | | 100 ml de milieu pour Lactobacilles dans chaque erlenmeyer à bafles.<br>Milieu pour les lactobacilles :<br><br> Tryptone :15 g<br> Glucose:15g<br> Extrait de levure:2,5g<br> Twen 80:1ml<br> Solution minérale:10ml<br> Eau distillée<br> q.s.p:1000 ml<br> (Autoclave:20mn à 1 bar) | Aérobiose :<br><br>Table agitatrice 150 rotations/mn<br>Amplitude:2,5cm<br>Température:30°C<br><br>pH:6,2 |

| INOCULUM | MATERIEL UTILISE | MILIEU DE CULTURE | CONDITIONS DE CULTURE |
|---|---|---|---|
| | | TROISIEME ETAPE: CULTURE DES CELLULES EN FERMENTEUR | |

**TROISIEME ETAPE: CULTURE DES CELLULES EN FERMENTEUR**

| INOCULUM | MATERIEL UTILISE | MILIEU DE CULTURE | CONDITIONS DE CULTURE |
|---|---|---|---|
| Erlenmeyers de la deuxiéme étape | **Fermenteur** | (1) <u>Hydrolyse enzymatique de l'amidon</u> :<br><br>1,2kg de farine + 5ml d'antimousse<br>10,5l d'eau<br><br>a: montée en température à 100°C ——→ 100°C pendant 1mn<br>b: traitement à l'$\alpha$ amylase ——→ 75°C pendant 30mn<br>    (1,2 ml)<br>c: traitement au $\beta$ amylase ——→ 60°C pendant 90mn<br>    (18 ml)<br><br>(ENZYMES FOURNIS PAR RAPIDASE) | Agitation<br>500 t/mn |
| | | 2 <u>Stérilisation après ajout de</u> :<br><br>Germe de blé :360g<br>Extrait de levure:60g<br>$KH_2PO_4$ :30g<br>$NH_4Cl$ :60g | Température:115°C<br><br>Durée:30mn |
| | Concentrations en cellu-les par ml<br><br>   levure Lactobacille<br>Départ  $1,2.10^8$  $7.10^7$<br><br>Fin   $2.10^9$  $10^9$ | 3 <u>Fermentation</u><br>Le pH est régulé par $NH_4OH$ 3 N et l'acide<br>orthophosphorique 3N<br>En fin de fermentation<br>   500ml d'ammoniaque environ ont été ajoutés<br>   de même que 10ml d'acide orthophosphorique<br>   environ | Agitation<br>500 t/mn<br><br>Température:30°C<br><br>pH :4,5<br><br>Oxygène dissous:100%<br>au départ |

0 093 635

**Revendications**

1. Procédé de préparation de ferments en phase liquide en vue de l'ensemencement et de la fermentation contrôlée d'une pâte à base de farine et d'eau pour la confection rapide d'un levain de panification du type dans lequel on utilise concurremment au moins une souche de lactobacille (choisie dans la famille comprenant Lactobacillus brevis, Lactobacillus casei, Lactobacillus delbrüeckii, Lactobacillus fermenti, Lactobacillus plantarum, Leuconostoc mesenteroïdes, Pediococcus cerevisiae) et au moins une souche de levure (choisie dans la famille comprenant saccharomyces cerevisiae et Candida tropicalis), caractérisé par la succession des opérations suivantes :

— on isole des souches de micro-organismes sélectionnés et constitués d'au moins une souche de lactobacille et d'au moins une souche de levure et on développe séparément une colonie de chacune des souches isolées,

— on ensemence et on cultive lesdites colonies sur un milieu aqueux unique et commun et constitué de farine céréalière diluée dans environ 7 à 10 fois son volume d'eau,

— on recueille le milieu aqueux de culture après fermentation et prolifération des souches de micro-organismes sélectionnées, ce milieu constituant le concentrat fermentaire recherché.

2. Procédé selon la revendication 1, caractérisé en outre en ce que le milieu de culture ensemencé par respectivement au moins une souche de levure et une souche de lactobacille est constitué par une dilution d'une part de farine et 0,3 part de germe de blé dans environ 8,5 parts d'eau.

3. Procédé selon la revendication 1 ou la revendication 2, caractérisé en outre en ce que le milieu de culture avant ensemencement par les souches de micro-organismes est soumis à un traitement en vue de l'hydrolyse de l'amidon.

4. Procédé selon la revendication 3, caractérisé en outre en ce que le traitement d'hydrolyse de l'amidon est obtenu par action enzymatique, suivie d'une phase de stérilisation thermique en vue de la destruction des enzymes ainsi précédemment introduits.

5. Procédé selon l'une des revendications 1 à 4, caractérisé en ce que l'ensemencement du milieu de culture et le développement des couches de micro-organismes au sein de ce milieu est effectué dans un fermenteur à agitation et insufflation d'air à température voisine de 30 °C.

6. Procédé selon l'une des revendications 1 à 5, caractérisé en ce que la farine diluée dans l'eau en vue de constituer le milieu de culture est de la farine de blé blutée à 83 % de mouture fraîche conduite sur meule de pierre.

7. Ferment en vue de l'ensemencement et de la fermentation contrôlée d'une pâte à base de farine et d'eau pour préparer rapidement un levain de panification, du type constitué de cultures fraîches de micro-organismes comportant d'une part au moins une souche de lactobacilles (choisie dans le groupe comportant Lactobacillus brevis, Lactobacillus casei, Lactobacillus delbrüeckii, Lactobacillus fermenti, Lactobacillus plantarum, leuconostoc mesenteroïdes, Pediococcus cerevisiae), et d'autre part au moins une souche de levure (choisie dans le groupe comportant saccharomyces cerevisiae et Candida tropicalis) et obtenu selon le procédé conforme à l'une des revendications 1 à 6 ci-dessus, et caractérisé en ce qu'il est constitué d'une suspension en milieu aqueux, composée de farine céréalière diluée dans de l'eau et ayant constituée le milieu de culture support du développement des lactobacilles et levures.

8. Ferment selon la revendication 7, caractérisé en outre en ce que le milieu aqueux comporte entre 7 à 10 parts d'eau pour une part de farine céréalière et de préférence 8,5 parts d'eau et il comporte en outre 0,3 part de germe de blé.

9. Ferment selon l'une des revendications 7 ou 8, caractérisé en ce que la concentration des micro-organismes par millilitre est voisine de :
— lactobacille : $10^9$ — levure : $2 \cdot 10^9$.

**Claims**

1. Process for preparation of ferments in liquid phase with a view to the seeding and controlled fermentation of a dough based on flour and water for the rapid making of a leavening agent of panification of the type in which at least one strain of lactobacillus (selected from the family including Lactobacillus brevis, Lactobacillus casei, Lactobacillus delbrüeckii, Lactobacillus fermenti, Lactobacillus plantarum, Leuconostoc mesenteroides, Pediococcus cerevisiae) and at least one strain of yeast (selected from the family including saccharomyces cerevisiae and Candida tropicalis), are used concurrently, characterized by the succession of the following operations :

— isolating strains of selected micro-organisms constituted by at least one strain of lactobacillus and at least one strain of yeast and developing separately a colony of each of the isolated strains,

— seeding and cultivating said colonies on a sole and common aqueous medium constituted by cereal flour diluted in about 7 to 10 times its volume of water,

— collecting the aqueous culture medium after fermentation and proliferation of the selected strains of micro-organisms, this medium constituting the desired concentrate of ferment.

2. Process according to Claim 1, further characterized in that the culture medium seeded respectively by at least one strain of yeast and one strain of lactobacillus is constituted by a dilution on the one hand of flour and 0,3 part of wheat germ in about 8,5 parts of water.

3. Process according to Claim 1 or Claim 2, further characterized in that the culture medium before seeding by the strains of micro-organisms is subjected to a treatment with a view to the hydrolysis of the starch.

4. Process according to Claim 3, further characterized in that the treatment of hydrolysis of the starch is obtained by enzymatic action, followed by a phase of heat sterilization with a view to the destruction of the enzymes thus previously introduced.

5. Process according to one of Claims 1 to 4, characterized in that the seeding of the culture medium and the development of the layers of micro-organisms within this medium is effected in a fermenter with stirring and blowing in of air at a temperature close to 30 °C.

6. Process according to one of Claims 1 to 5, characterized in that the flour diluted in water with a view to constituting the culture medium is wheat flour bolted to 83 % of fresh grist effected on grindstone.

7. Ferment for the seeding and controlled fermentation of a dough based on flour and water to rapidly prepare a leavening agent of panification, of the type constituted by fresh cultures of micro-organisms comprising on the one hand at least one strain of lactobacilli (selected from the group comprising lactobacillus brevis, Lactobacillus casei, Lactobacillus delbrüeckii, Lactobacillus fermenti, Lactobacillus plantarum, leuconostoc mesenteroides, Pediococcus cerevisiae), and on the other hand at least one strain of yeast (selected from the group comprising saccharomyces cerevisiae and Candida tropicalis) and obtained in accordance with the process according to one of Claims 1 to 6 hereinabove, and characterized in that it is constituted by a suspension in aqueous medium, composed of cereal flour diluted in water and having constituted the culture medium supporting the development of the lactobacilli and yeasts.

8. Ferment according to Claim 7, further characterized in that the aqueous medium comprises between 7 and 10 parts of water for one part of cereal flour and preferably 8,5 parts of water, and it further comprises 0,3 part of wheat germ.

9. Ferment according to one of Claims 7 or 8, characterized in that the concentration of the micro-organisms per millilitre is close to :
— lactobacillus : $10^9$ — yeast : $2 \cdot 10^9$.


## Patentansprüche

1. Verfahren zum Darstellen von Fermenten in der flüssigen Phase zum Zwecke des Ansetzen und kontrollierten Fermentieren von Teig auf Mehl- und Wasserbasis für die Schnellherstellung von Brotteig, wobei gleichzeitig zumindest ein Milchbakterienstamm (aus der Gruppe : Lactobacillus brevis, Lactobacillus casei, Lactobacillus delbrüeckii, Lactobacillus fermenti, Lactobacillus plantarum, Leuconostoc mesenteroïdes, Pediococcus cerevisiae) und zumindest ein Hefestamm (aus der Gruppe : Saccharomyces cerevisiae und Candida tropicalis) verwendet werden, dadurch gekennzeichnet, daß folgende Verfahrensschritte zur Anwendung kommen :
— daß die ausgewählten Stämme der Mikroorganismen isoliert, daß zumindest ein Stamm Lactobazillen und zumindest ein Stamm Hefepilze verwendet werden und daß einzeln eine Kolonie jedes isolierten Stammes entwickelt wird,
— daß die Kolonien auf einem eindeutigen und gemeinsamen wässrigen Milieu angesetzt und gezüchtet werden, das aus Getreidemehl besteht, das mit etwa dem 7 bis 10 fachen seiner Wassermenge verdünnt ist,
— und daß das wässrige Kulturmilieu nach der Fermentation und dem wucherartigen Wachstum der gewählten Stämme der Mikroorganismen aufgefangen wird, wobei dieses Milieu das gesuchte Gärungskonzentrat bildet.

2. Verfahren nach Anspruch 1, dadurch gekennzeichnet, daß das Kulturmilieu, das zumindest mit einem Hefeplizstamm bzw. einem Stamm Laktobazillen angesetzt ist, gebildet wird durch Verdünnen von zumindest einem Teil des Mehls und 0,3 Teilen Weizenkeim im etwa 8,5 Teilen Wasser.

3. Verfahren nach einem der Ansprüche 1 oder 2, dadurch gekennzeichnet, daß das Kulturmilieu vor dem Ansetzen durch die Stämme der Mikroorganismen einer Behandlung zur Stärkehydrolyse ausgesetzt wird.

4. Verfahren nach Anspruch 3, dadurch gekennzeichnet, das die Behandlung der Stärkehydrolyse durch enzymatische Tätigkeit erzielt wird, auf die eine Phase der Wärmesterilisierung zum Zerstören der vorher eingeführten Enzyme folgt.

5. Verfahren nach einem der Ansprüche 1 bis 4, dadurch gekennzeichnet, daß das Ansetzen des Kulturmilieus und die Entwicklung der Mikroorganismenstämme innerhalb dieses Milieus in einem Rührfermenter durchgeführt wird, wobei Luft mit einer Temperatur nahe 30 °C eingeblasen wird.

6. Verfahren nach einem der Ansprüche 1 bis 5, dadurch gekennzeichnet, daß das Mehl, das zur Bildung des Kulturmilieus in Wasser verdünnt ist, das bis zu 83 % gesichtetes, auf Mühlsteinen frisch gemahlenes Getreidemehl ist.

7. Ferment zum Ansetzen und kontrollierten Fermentieren von Teig auf Mehl- und Wasserbasis für die Schnellherstellung von Brotteig, worin Frischkulturen von Mikroorganismen bestehend einerseits aus zumindest einem Stamm von Laktobazillen (aus der Gruppe : Lactobacillus brevis, Lactobacillus casei,

12

**0 093 635**

Lactobacillus delbrüeckii, Lactobacillus fermenti, Lactobacillus plantarum, Leuconostoc mesenteroides, Pediococcus cervisiae) und andererseits aus zumindest einem Stamm Hefepilzen (aus der Gruppe : Saccharomyces cerevisiae und Candida tropicalis) verwendet werden und der nach dem Verfahren nach den Ansprüchen 1 bis 6 hergestellt wird, gekennzeichnet durch eine Suspension im wässrigen Milieu, die aus in Wasser verdünnten Getreidemehl besteht und die das die Entwicklung der Laktobazillen und Hefepilzen tragende Kulturmilieu bildete.

8. Ferment nach Anspruch 1, dadurch gekennzeichnet, daß das wässrige Milieu zwischen 7 bis 10 Teile Wasser für einen Teil Getreidemehl und vorzugsweise 8,5 Teile Wasser sowie 0,3 Teile Getreidekeime aufweist.

9. Ferment nach einem der Ansprüche 7 oder 8, dadurch gekennzeichnet, daß die Konzentration an Mikroorganismen pro Milliliter nahe bei :
— Laktobazillus : $10^9$ — Hefe : $2 \cdot 10^9$ liegt.